# FASCICULE DE BREVET EUROPEEN

(11) **EP 1 887 052 B1**
(45) Date de publication et mention de la délivrance du brevet: **21.10.2009**
(21) Numéro de dépôt: 06405325.9
(22) Date de dépôt: 31.07.2006
(51) Int. Cl.: C09C 1/62, C09C 1/66, C09C 1/00, C04B 35/628, C04B 35/488, C04B 35/119

(54) **Piéce en céramique pigmentée**
Pigmentierter keramischer Körper
Pigmented ceramic element

(43) Date de publication de la demande: 13.02.2008
(73) Titulaire: ROLEX SA, 1211 Genève 26 (CH)
(72) Inventeur: Fink-Petri Alke, 1030 Bussigny-Lausanne (CH); Hoffmann Heinrich, 1009 Pully (CH)
(74) Mandataire: Moinas, Michel

(56) Documents cités:
- EP-A- 0 741 172
- WO-A-03/076521
- US-A- 6 074 754
- F. GARCIA SANTAMARIA, V.SALGUERINO MACERIA, C. LOPEZ, L.M. LIZ MARZAN: "Synthetic opals based on silica coated gold nanoparticles" LANGMUIR, vol. 18, 5 février 2002 (2002-02-05), pages 4519-4522, XP002407999
- KOBAYASHI Y ET AL: "Silica coating of silver nanoparticles using a modified Stober method" JOURNAL OF COLLOID AND INTERFACE SCIENCE, ACADEMIC PRESS, NEW YORK, NY, US, vol. 283, no. 2, 15 mars 2005 (2005-03-15), pages 392-396, XP004753414 ISSN: 0021-9797

## Description

La présente invention se rapporte à une pièce constituée en tout ou partie d'une céramique pigmentée, particulièrement une pièce d'horlogerie, de bijouterie ou de joaillerie, qui peut être pigmentée dans la masse ou superficiellement.

On sait qu'une des tendances actuelles par exemple dans l'horlogerie, de même que dans la bijouterie ou dans la joaillerie, est de s'orienter vers des pièces ou objets en céramique, cette tendance étant néanmoins contrecarrée par l'impossibilité d'obtenir toute la gamme des couleurs et coloris, et ceci quelque soit le pigment ou la céramique utilisée.

En particulier il est difficile, sinon impossible, d'obtenir jusqu'à présent certaines gammes ou variétés de rouge qui soient franches, vives et stables dans le temps.

De nombreux essais ont été faits en ce sens, y compris en utilisant comme pigment des nanoparticules enrobées, notamment des nanoparticules revêtues de silice, mais les céramiques finies obtenues, se sont toujours avérées avoir des couleurs ternies et "sales", s'apparentant plutôt à un brun mal défini.

La demande internationale n° WO 03/076521 décrit l'utilisation de nanoparticules d'or, d'argent ou de cuivre comme pigments dans des matériaux céramiques.

L'article intitulé « Synthetic opals based on silica coated gold nanoparticles », du Langmuir 2002, volume 18, pages 4519 à 4522 et publié le 5 février 2002 décrit des nanoparticules d'or revêtues d'une couche de silice. Il est également indiqué que les particules enrobées peuvent subir un traitement thermique en vue d'obtenir un revêtement de silice cristalline. Aucune indication concernant l'utilisation de ce type de particules enrobées comme pigments n'est présente dans ce document.

L'objet de l'invention vise précisément à surmonter les handicaps précités, en proposant précisément des pièces d'horlogerie, de bijouterie ou de joaillerie réalisées en céramique dans toute la gamme des couleurs désirées, en particulier dans la gamme des rouges.

Les pièces selon l'invention, qui sont réalisées en céramique pigmentée dans la masse ou superficiellement, utilisent un pigment qui est constitué de nanoparticules à base d'un métal de la colonne IB de la classification périodique des éléments (en résumé "métal IB") ou d'un alliage de celui-ci, revêtu d'une couche de silice, la silice étant sous la forme d'une silice cristalline.

Les métaux de la colonne IB de la classification périodique des éléments du tableau de Mendéleev, encore nommée classe 11 selon la présentation, comprennent le cuivre, l'argent et l'or, qui, comme les métaux alcalins (classe lA ou 1 selon la présentation) ont un électron libre sur leur couche électronique la plus externe. De ce fait, ils peuvent induire des effets de résonance plasmon de surface en créant des couleurs, en particulier des couleurs entre le rouge, le violet et le bleu, leur résonance plasmon de surface se situant dans le spectre visible. Sans entrer dans les détails, rappelons que le plasmon de surface est une onde à décroissance exponentielle des deux côtés de l'interface séparant le métal considéré d'un milieu diélectrique. Ce plasmon de surface a un caractère d'ondes évanescentes et c'est lui qui est responsable des effets de couleurs constatés.

Le métal IB utilisé peut être massif ou plaqué. Dans ce dernier cas, le métal IB ne sera que la couche extérieure d'une particule dont le noyau est constitué d'un autre métal IB, d'un métal commun ou d'un minéral. On citera par exemple le "vermeil", très usité en bijouterie et qui est de l'argent recouvert d'or

On pourra utiliser aussi des alliages, comme l'or 18 carats (titrant 75%) ainsi que les ors communément appelés en orfèvrerie "or blanc" (alliages d'or et de nickel), "or rouge" (alliages d'or et de cuivre), "or vert" (alliages d'or et d'argent), "or gris" (alliages d'or et de fer), "or violet" (alliages d'or et d'aluminium) "or jaune", "rosé" ou "rose" (alliages d'or, d'argent et de cuivre), etc

Pour la clarté de l'exposé qui suit, on parlera désormais simplement de "métal" pour désigner indifféremment un métal proprement dit ou un alliage.

Comme indiqué plus haut, les différentes tentatives réalisées jusqu'à présent, utilisant comme pigments des nanoparticules, conduisaient immanquablement aux couleurs "sales" évoquées précédemment, spécialement dans la gamme des rouges, et ceci quels que soient les paramètres utilisés et le soin apporté à l'élaboration de la céramique, phénomène accompagné parfois d'un glissement de couleur vers le bleu.

Ceci peut être imputé, a-t-on constaté, à plusieurs facteurs intervenant tous durant l'opération de frittage de la pièce céramique : d'une part la diffusion des espèces métalliques au travers du revêtement de silice lorsque celui-ci n'est pas cristallisé, d'autre part un phénomène de coalescence des noyaux des nanoparticules constituant le pigment lorsque celles-ci sont polynucléaires (voir plus loin), et d'autre part encore une agglomération ou agglutination des nanoparticules de pigment entre elles.

Au contraire, lorsque la silice est cristallisée, ce revêtement sert de barrière de diffusion au métal composant le noyau quand la nanoparticule est soumise à des hautes températures. Il n'y a plus, non plus, ni coalescence, ni agglutination.

La transformation de la silice amorphe en silice cristallisée enrobant les nanoparticules, avant leur utilisation comme pigment, est réalisée par un traitement thermique à une température comprise entre 800°C (de préférence supérieure à 900°C) et 1'400°C, notamment entre 1'100°C et 1'250°C, les temps de traitement étant alors avantageusement compris entre 30 minutes et 24 heures.

Ce traitement peut se réaliser à l'air ou en atmosphère inerte, sous azote ou argon par exemple.

De façon surprenante, il n'y a aucune migration ni coalescence même si la céramique est élaborée à une température nettement supérieure à celle du point de fusion du métal ou de l'alliage constituant le ou les noyaux des nanoparticules, avec une couleur qui reste "propre" et franche. La silice cristallisée emprisonne parfaitement le métal constituant le ou les noyaux. Ainsi on peut par exemple fabriquer des pièces en céramique de zircone ou d'alumine rouges par frittage à une température de l'ordre de 1'100 à 1'200°C, pigmentée par des nanoparticules à noyau d'or enrobé de cristobalite, alors que le point de fusion de l'or est de 1'036°C. Les nanoparticules obtenues sont donc stables à 1'200°C, soit à une température supérieure de 136°C à celle de l'or !

La phase de la silice revêtant le ou les noyaux ou coeurs en métal IB ou en métal alcalin est sans importance sur le résultat obtenu pour autant qu'elle soit cristalline, dans la mesure où ce métal reste bien contenu, sans migration ou coalescence. Le quartz présente l'inconvénient d'une transformation de bêta-quartz en alpha-quartz vers 560°C avec une variation de volume de l'ordre de 5 %, ce qui pose des difficultés pratiques. On préfèrera la tridymite et la cristobalite, surtout la cristobalite plus simple à obtenir car elle nécessite des traitements thermiques plus courts,

Dans le cadre de l'invention, les nanoparticules servant de pigment peuvent être mononucléaires ou polynucléaires, c'est à dire comprendre un noyau au coeur en métal IB ou en métal alcalin, ou respectivement un ou plusieurs noyaux, le tout enrobé dans une couche de silice cristalline. On parlera alors plutôt de perles ou de billes.

Comme on le sait, on désigne par nanoparticules, des particules ayant un diamètre moyen généralement inférieur à 100-200 nanomètres et on choisira en l'occurrence, pour obtenir des effets de couleurs désirés, un diamètre moyen de particules compris entre 5 et 25 nanomètres, de préférence entre 10 à 15 nanomètres pour des nanoparticules mononucléaires.

Les métaux présentant le plus d'intérêt seront donc ceux de la colonne IB, le cuivre bien sûr, mais plus particulièrement l'or et l'argent pour l'élaboration de pièces devant constituer des produits de luxe.

Comme céramique on utilisera bien entendu une céramique adaptée à l'objet que l'on veut façonner, mais on préférera un oxyde tel qu'une zircone, une alumine, ou leurs mélanges, les zircones étant intéressantes pour leurs propriétés mécaniques élevées. La zircone pure ZrO₂ est légèrement jaune, l'alumine Al₂O₃ blanche, sauf les alumines denses monocristallines qui sont transparentes. Le choix de la céramique dépendra des pièces à fabriquer. Ainsi, dans le domaine de l'horlogerie, on utilisera plutôt une zircone pour faire des boîtes ou des lunettes de montres, réservant de préférence l'alumine à d'autres pièces telles que les aiguilles.

Lorsqu'on parle de "une zircone", il faut bien comprendre qu'on entend englober sous ces désignations, non seulement l'oxyde de zirconium proprement dit, mais aussi les zircones dans lesquelles l'élément zirconium a été partiellement remplacé par un autre élément métallique, tel que l'yttrium ou le magnésium. Ces céramiques sont connues sous le nom de zircone à l'yttrium ou zircone yttriée, qui comprend de l'oxyde d'yttrium Y₂O₃ ; respectivement de zircone à la magnésie, qui comprend de l'oxyde de magnésium MgO. Il en va de même pour la désignation "une alumine" qui peut comprendre d'autres éléments que l'aluminium, ou de la désignation "une céramique" qui peut correspondre à des compositions complexes, ces céramiques complexes pouvant être stroechiométriques ou non.

La quantité de pigment dispersée dans la masse de la céramique est de préférence comprise entre 1 et 5 %, de préférence 2 à 4 %, les valeurs inférieures donnant des teintes plus pastel, tandis que les valeurs supérieures donnent des teintes plus vives.

On peut par exemple obtenir ainsi des pièces céramiques d'horlogerie dans la gamme des rouges en utilisant des nanoparticules d'or de diamètre moyen compris entre 10 et 15 nanomètres dispersées au sein d'une matrice en zircone ou en zircone/alumine

On observera ici que les couleurs peuvent par ailleurs être modulées en jouant sur la couleur intrinsèque de la céramique et/ou celle apportée par le métal constituant le coeur des nanoparticules.

L'épaisseur de la couche de silice cristallisée d'enrobage n'est pas critique dans la mesure où celle-ci est suffisante. Il semble qu'une valeur de 3 nm soit un minimum et 50 nm soit un maximum pratique qu'on n'atteindra évidemment que pour des "grands" diamètres de nanoparticules, de l'ordre de 100-200 nanomètres. Cette épaisseur a relative peu d'effet sur la couleur, contrairement à la taille des nanoparticules elles-mêmes. Par exemple, dans le cas de l'or, plus grande est la taille des nanoparticules, plus la nuance tire vers un bleu métallique tandis que, plus petite est celle-ci, plus la nuance tire vers le rouge.

Toutes choses étant égales par ailleurs, l'utilisation d'argent au lieu d'or donne des nuances légèrement plus jaunes.

La préparation des nanoparticules de métal enrobé de silice cristalline est réalisée en suspension dans un milieu alcoolique (méthanol, éthanol, propanol, isopronanol ou isobutanol notamment) en présence d'ammoniaque. De fines particules colloïdales du métal choisi sont mises en suspension dans le milieu précité, puis on ajoute comme source de Si, un alcoxysilane encore appelé alkylorthosilicate ou siloxane (termes utilisés indifféremment dans la suite de l'exposé) dont la transformation en présence d'eau ajoutée dans le mélange réactionnel va produire de la silice qui se dépose sur les particules de métal. On obtient ainsi des nanoparticules métalliques colorées revêtues par de la silice amorphe.

On transforme les nanoparticules revêtues de silice amorphe en nanoparticules revêtues de silice cristallisée en chauffant celles-ci, une fois isolées, aux températures indiquées plus haut. Par exemple, en chauffant des nanoparticules d'or à 1'200°C à l'air pendant quelques heures, on obtient des nanoparticules d'or dont, de façon inattendue, la saturation des couleurs augmente fortement. C'est que la silice amorphe enrobant l'or s'est transformée en une de ses phases cristallines, en l'occurrence la cristobalite qui est une phase métastable à température ambiante.

Les pièces en céramiques colorées sont alors réalisées par frittage d'une poudre constituée par le mélange de particules de céramique, par exemple de zircone, d'alumine ou leurs mélanges, comme indiqué plus haut, et des nanoparticules de pigment à silice cristallisée. Le frittage pourra se dérouler par exemple à une température finale comprise entre 900°C et 1'400°C durant 30 minutes à 24 heures et éventuellement sous pression. Le frittage proprement dit peut être précédé d'un préfrittage.

Les méthodes de mise en forme de pièces céramiques sont bien connues et peuvent être regroupées par catégories, à savoir les méthodes par voie humide, les méthodes par voie sèche, et les méthodes par injection. Dans les premières, on citera le coulage en barbotine, le coulage en bande et le coulage sous pression ou moulage par injection basse pression. Parmi les deuxièmes, on nommera par exemple le pressage uniaxial à froid ou à chaud, le pressage isostatique à froid ou à chaud et le frittage flash. Enfin, au nombre des troisièmes, on indiquera à titre d'exemple le moulage par injection basse pression (déjà citée ci-dessus) et le moulage par injection haute pression. Toutes conviennent à des degrés divers pour fabriquer les pièces en céramiques pigmentées selon l'invention. Toutefois, si on veut préparer une pièce par mise en forme à une température inférieure à 1'250°C environ, on partira avantageusement d'une poudre céramique nanostructurée ou dispersée, et/ou comprenant des adjuvants, et on privilégiera les méthodes par voie humide.

Selon la façon dont on procède dans l'étape d'élaboration de la pièce finale, on obtiendra une pièce pigmentée dans la masse ou une pièce pigmentée en surface seulement.

On peut ainsi obtenir, après traitement thermique, toute sorte de pièces ou d'objets en céramique pigmentés dans la masse ou en surface, de toute couleur et d'une grande liberté de forme, des parures de bijouterie ou de joaillerie bien sûr, mais aussi des pièces d'horlogerie, en particulier des boîtiers, des lunettes, des cadrans, des éléments de bracelets, des aiguilles et des accessoires tels que des remontoirs. On peut ainsi accéder à des pièces de couleur rouge pigmentées dans la masse, impossibles à fabriquer autrement.

Au nombre des avantages, à côté de l'obtention de rouges comme indiqué ci-dessus, on retiendra que la fabrication des céramiques pigmentées selon l'invention est écologique et respectueuse de l'environnement. Elle n'utilise en effet pas d'autres solvants que des alcools.

L'invention sera mieux comprise en référence aux exemples qui suivent, donnés à titre non limitatif. Les exemples 1 à 7 concernent des pigmentations dans la masse, tandis que l'exemple 8 concerne une pigmentation superficielle.

### Exemple 1

On place dans un ballon 10 ml d'une suspension d'or (BB International, colloïde d'or, 15 nanomètres C = 5.5 10⁻⁵ g or/ml) et on ajoute en agitant 400 ml d'éthanol (Merck, absolu pour analyse) et 30 ml d'ammoniaque à 28 %. On place alors le ballon dans un bain d'huile dont la température est réglée à 50° C, puis on agite le mélange avec un agitateur magnétique. On ajoute alors rapidement 5 ml de tétraéthylorthosilicate TEOS (Merck) au mélange. On laisse la suspension réagir à cette température sous agitation pendant une heure. Après quoi, on sort le ballon du bain d'huile, on laisse refroidir la suspension à la température ambiante et on retire l'agitateur magnétique. On isole la poudre de la suspension par élimination du dispersant sous vide.

On obtient ainsi des nanoparticules de silice amorphe à noyau d'or, que l'on fait chauffer à l'air jusqu'à 1200°C pendant plusieurs heures, jusqu'à ce que l'on détecte un changement important dans la saturation de la couleur.

Une analyse par diffraction des rayons X montre alors que la silice amorphe de la couche enrobant l'or a été modifiée en cristobalite par le chauffage.

Pour la fabrication de la pièce finie, on utilise la méthode de la barbotine en procédant par filtration sous pression d'une suspension colloïdale stabilisée contenant des particules isolées de zircone yttriée nanostructurée et des nanoparticules de pigments à raison de 2 % en poids pigment/zircone, la proportion en poids de solide dans la suspension pouvant être comprise entre 10 et 60%.

La suspension est alors forcée par un piston à travers un filtre céramique recouvert d'un filtre, sous une pression de l'ordre de 10 MPa qui demeure constante jusqu'à ce que toute la suspension soit filtrée. La pièce est séchée par dessiccation jusqu'à stabilisation de sa masse, puis frittée à l'air entre 1'200°C et 1'300°C. On obtient ainsi une pièce en céramique d'un rouge éclatant.

Mentionnons ici que les proportions pondérales nanoparticules/zircone peuvent varier de 0,5 à 5 %, sous réserve de ce qui est indiqué à l'exemple suivant. La pression de filtration peut s'échelonner de 2 à 20 MPa, et le temps de frittage varier de 30 minutes à 8 heures, tout en restant dans la gamme des rouges.

### Exemple 2

On procède comme décrit à l'exemple 1, mais après l'opération de séchage de la pièce native par dessiccation, on soumet celle-ci à une étape complémentaire de pressage isostatique à froid. Cela permet de densifier encore plus la pièce avant frittage.

### Exemple 3

On procède comme décrit à l'exemple 1, mais après l'opération de séchage de la pièce native par dessiccation, on soumet celle-ci à une étape de préfrittage à l'air à une température comprise entre 1'000°C et 1'200°C. La pièce subit ensuite un traitement par pressage isostatique à chaud sous pression et en atmosphère de gaz inerte comprise entre 50 et 300 MPa, à une température variant entre 1'200°C et 1'300°C.

### Exemple 4

On procède comme décrit à l'exemple 1, mais avec des proportions pondérales nanoparticules/zircone plus élevées (4 %). Les particules ayant alors tendance à s'agglomérer, on contre cette tendance en soumettant le mélange à un traitement de dispersion par ultrasons.

### Exemple 5

On procède comme décrit à l'exemple 1 en remplaçant la suspension d'or par une suspension d'argent, et on obtient ainsi une pièce pigmentée par des nanoparticules d'argent, dans une nuance de rouge plus jaune que la pièce de l'exemple 1.

### Exemple 6

On procède comme décrit à l'exemple 1 en remplaçant la zircone par de l'alumine, et on obtient ainsi une pièce dont le rouge tire sur le rose, quand on la compare à la pièce de l'exemple 1.

### Exemple 7

On procède comme décrit à l'exemple 1 en remplaçant la zircone un mélange zircone/alumine 50/50 en poids, et on obtient ainsi une pièce également rouge.

### Exemple 8

On procède comme décrit à l'exemple 1, mais on modifie la façon dont sont mises en oeuvre les nanoparticules d'une part, la céramique d'autre part, comme suit :
La pièce céramique, sans pigments, est mise en forme puis préfrittée à l'air ou sous gaz neutre à une température comprise entre 850°C et 1'150°C. A l'issue de ce traitement thermique, la pièce préfrittée est plongée dans une suspension colloïdale de nanoparticules de pigments revêtus de silice cristallisée. La pièce est ensuite séchée au dessiccateur puis frittée, éventuellement sous pression, entre 1'200°C et 1'300°C.

Dans tous les exemples, on peut remplacer l'éthanol et le tétraéthylorthosilicate, par un autre alcool et un autre tétraalkyllorthosilicate, de préférence en utilisant le même reste R Alkyl, par exemple en utilisant le tétraméthylorthosilicate TMOS si on utilise du méthanol comme alcool ou du tétraisopropylorthosilicate si on utilise de l'isopropanol, etc.

On peut aussi remplacer l'ammoniaque par une solution aqueuse de soude ou de potasse.

## Revendications

1. Pièce constituée en tout ou partie d'une céramique pigmentée, **caractérisée en ce que** le pigment est constitué de nanoparticules à base d'un métal de la colonne IB de la classification périodique des éléments ou d'un alliage de celui-ci, revêtu d'une couche de silice, la silice étant de la silice cristalline.

2. Pièce selon la revendication 1, **caractérisée en ce que** la silice cristalline est sous la forme de cristobalite ou de tridymite.

3. Pièce selon la revendication 1 ou 2, **caractérisée en ce que** le métal est de l'or ou de l'argent ou un de leurs alliages entre eux ou avec d'autres métaux..

4. Pièce selon l'une des revendications 1,2 ou 3, **caractérisée en ce que** le pigment est dispersé dans la masse de la céramique à raison de 1 à 5% pondéraux.

5. Pièce selon l'une des revendications 1 à 4, **caractérisée en ce que** la taille des nanoparticules est comprise entre 5 et 25 nm.

6. Pièce selon l'une des revendications 1 à 5, **caractérisée en ce que** la céramique est un oxyde, plus particulièrement une zircone ou une alumine ou un mélange des deux.

7. Pièce de couleur rouge selon les revendications 3 et 6, **caractérisée en ce que** le métal est de l'or ou un alliage or/argent et la céramique de la zircone.

8. Pièce selon l'une des revendications précédentes, **caractérisée en ce qu'**elle consiste en un boîtier, un cadran, une lunette, un bracelet ou des aiguilles de montre.

9. Procédé de fabrication d'une pièce d'horlogerie, de bijouterie ou de joaillerie selon l'une des revendications précédentes, par frittage d'une poudre céramique en présence de nanoparticules comprenant un métal de la colonne IB de la classification périodique des éléments ou d'un métal alcalin, ou d'un alliage de celui-ci, revêtu d'une couche de silice cristalline.

10. Procédé selon la revendication 9, **caractérisé en ce que** la poudre céramique est une poudre nanostructurée.

11. Procédé selon la revendication 9 ou 10, **caractérisé en ce que** la silice des nanoparticules a été cristallisé avant frittage par un traitement thermique à l'air ou sous gaz inerte à des températures comprises entre 900°C et 1'400°C.

12. Procédé selon la revendication 10 ou 11, **caractérisé en ce que** le frittage est réalisé sur le mélange de nanoparticules de pigment /céramique, à l'air ou sous gaz inerte, à des températures comprises entre 900 et 1'250°C.

## Claims

1. A piece comprised in part or in full of a pigmented ceramic, **characterized in that** the pigment is comprised of nanoparticles based on a metal from column IB of the periodic table of the elements or an alloy of the latter, coated with a layer of silica, the silica being crystalline silica.

2. A piece according to claim 1, **characterized in that** the crystalline silica is in cristobalite or tridymite form.

3. The piece according to claim 1 or 2, **characterized in that** the metal is gold or silver or one of their alloys with each other or with other metals.

4. The piece according to one of claims 1, 2 or 3, **characterized in that** the pigment is dispersed in the mass of the ceramic at the rate of 1 to 5% by weight.

5. The piece according to one of claims 1 to 4, **characterized in that** the nanoparticle size is between 5 and 25 nm.

6. The piece according to one of claims 1 to 5, **characterized in that** the ceramic is an oxide, more particularly, zirconia or alumina or a mixture of the two.

7. The red color piece according to claims 3 and 6, **characterized in that** the metal is gold or a gold/silver alloy and the ceramic is zirconia.

8. The piece according to one of the previous claims, **characterized in that** the piece consists of a watch container, a dial, a bezel, a bracelet or pins.

9. A method for manufacturing a timepiece component, jewel or jewelry piece according to one of the previous claims, by sintering a ceramic powder in the presence of nanoparticles comprising a metal from column IB of the periodic table of the elements or an alkaline metal, or an alloy of the latter, coated with a layer of crystalline silica.

10. The method according to claim 9, **characterized in that** the ceramic powder is a nanostructured powder.

11. The method according to claim 9 or 10, **characterized in that** the nanoparticle silica has been crystallized before sintering by a thermal treatment in air or under inert gas at temperatures of between 900°C and 1400°C.

12. The method according to claim 10 or 11, **characterized in that** sintering is done on the pigment/ceramic nanoparticle mixture in air or under inert gas at temperatures of between 900°C and 1250°C.

## Patentansprüche

1. Ganz oder teilweise aus einer pigmentierten Keramik bestehendes Stück, **dadurch gekennzeichnet, dass** das Pigment aus Nanoteilchen auf der Basis eines Metalls der Gruppe IB des Periodensystems der Element oder einer Legierung dieses Metalls besteht, das mit einer Siliciumdioxidschicht überzogen ist, wobei das Siliciumdioxid kristallines Siliciumdioxid ist.

2. Stück nach Anspruch 1, **dadurch gekennzeichnet, dass** das kristalline Siliciumdioxid in der Gestalt von Cristobalit oder Tridymit vorliegt.

3. Stück nach Anspruch 1 oder 2, **dadurch gekennzeichnet, dass** das Metall Gold oder Silber oder eine ihrer Legierungen miteinander oder mit anderen Metallen ist.

4. Stück nach einem der Ansprüche 1, 2 oder 3, **dadurch gekennzeichnet, dass** das Pigment in einem Verhältnis von 1 bis 5 Gewichtsprozent in der Keramikmasse dispergiert wird.

5. Stück nach einem der Ansprüche 1 bis 4, **dadurch gekennzeichnet, dass** die Grösse der Nanoteilchen zwischen 5 und 25 nm liegt.

6. Stück nach einem der Ansprüche 1 bis 5, **dadurch gekennzeichnet, dass** die Keramik ein Oxid und genauer ein Zirconiumdioxid oder ein Aluminiumoxid oder eine Mischung der beiden ist.

7. Rot gefärbtes Stück nach den Ansprüchen 3 und 6, **dadurch gekennzeichnet, dass** das Metall Gold oder eine Gold-Silber-Legierung und die Keramik Zirconiumdioxid ist.

8. Stück nach einem der vorangehenden Ansprüche, **dadurch gekennzeichnet, dass** es aus einem Gehäuse, Zifferblatt, Glasreif, Armband oder Zeigern einer Uhr besteht.

9. Verfahren zur Herstellung einer Uhr, eines Schmuckstücks oder eines Juwelierstücks nach einem der vorangehenden Ansprüche durch Sintern eines keramischen Pulvers in der Gegenwart von Nanoteilchen, die ein Metall der Gruppe 1 B des Periodensystems der Elemente oder ein Alkalimetall oder eine Legierung davon umfassen, die von einer Schicht von kristallinem Siliciumdioxid überzogen sind.

10. Verfahren nach Anspruch 9, **dadurch gekennzeichnet, dass** das keramische Pulver ein nanostrukturiertes Pulver ist.

11. Verfahren nach Anspruch 9 oder 10, **dadurch gekennzeichnet, dass** das Siliciumdioxid der Nanoteilchen vor dem Sintern durch eine Hitzebehandlung an Luft oder unter Inertgas bei Temperaturen zwischen 900 °C und 1400 °C kristallisiert worden ist.

12. Verfahren nach Anspruch 10 oder 11, **dadurch gekennzeichnet, dass** das Sintern mit dem Gemisch von Pigment-Nanoteilchen und Keramik an Luft oder unter Inertgas bei Temperaturen zwischen 900 und 1250 °C realisiert wird.
